Europäisches Patentamt

European Patent Office

Office européen des brevets

(11) Publication number: **0 199 532**
**B1**

## (12) EUROPEAN PATENT SPECIFICATION

(45) Date of publication of patent specification: **26.07.89**

(51) Int. Cl.⁴: **F 16 B 2/26**

(21) Application number: **86302828.8**

(22) Date of filing: **16.04.86**

(54) C ring.

(30) Priority: **22.04.85 JP 84639/85**

(43) Date of publication of application:
**29.10.86 Bulletin 86/44**

(45) Publication of the grant of the patent:
**26.07.89 Bulletin 89/30**

(84) Designated Contracting States:
**AT DE FR GB NL SE**

(56) References cited:
**DE-A-1 575 087**
**GB-A-2 118 612**
**GB-A-2 125 875**

(73) Proprietor: **MEIHO, INC.**
**3-76-10, Hatagaya Shibuya-Ku**
**Tokyo (JP)**

(72) Inventor: **Murai, Tokuzo**
**911-1, Katakura-Cho**
**Hachioji-Shi Tokyo (JP)**

(74) Representative: **Calderbank, Thomas Roger**
**et al**
**MEWBURN ELLIS & CO. 2/3 Cursitor Street**
**London EC4A 1BQ (GB)**

EP 0 199 532 B1

# Description

The present invention relates to a C ring for securing members such as wire members.

A conventional C ring is made of wire rod and is bent in a figure C. The C ring is used when two spring wires provided for example within a bed, a cushion of an automobile seat, etc., are secured together or when any spring wire is secured with a peripheral wire or otherwise. In the case where two wires are secured together with the C ring, the C ring is clamped with a tool after positioning the wires in the C ring.

However, when wires are secured together with the C ring, the wire rod tends to spring back even though the C ring is clamped strongly on both sides by the tool and therefore the securing strength of the C ring is weak. Since the C ring and the wires are brought into direct contact, friction noise is caused to arise when the wires are actuated by force to deform them.

The present invention seeks to provide a C ring having a great securing strength.

The present invention also seeks to provide a C· ring which reduces friction noise as compared with prior art C rings.

The present invention provides a C ring comprising a metallic wire rod bent in a figure C and a pliable, non-metallic cover installed at least inside of said wire rod.

When members are secured together with such a C ring, the wire rod may be deformed as much as the deformed part of the cover when the C ring is clamped on the both sides by the tool, and therefore, despite the spring back of the wire rod, the cover is pushed against the members by the force of the wire rod, thus giving great securing strength to the C ring.

The C ring and the members do not come into direct contact, due to the presence of the cover, and therefore, less friction noise is generated than would be were the wire of the C ring in contact with the members.

In the drawings:

Fig. 1 is a view of a C ring which is an embodiment of the present invention;

Fig. 2 is a view of an enlarged cross-section taken along the line II-II of Fig. 1;

Fig. 3 is a view of another C ring which is a second embodiment of the present invention;

Fig. 4 is a view of an enlarged cross-section taken along the line IV-IV of Fig. 3;

Fig. 5 is a plan view of an assembly employing the C ring shown in Fig. 1;

Fig. 6 is a sectional view of a part of an assembly of the C ring shown in Fig. 1; and

Fig. 7 is a view shown in plan of an assembly employing the C ring shown in Fig. 3.

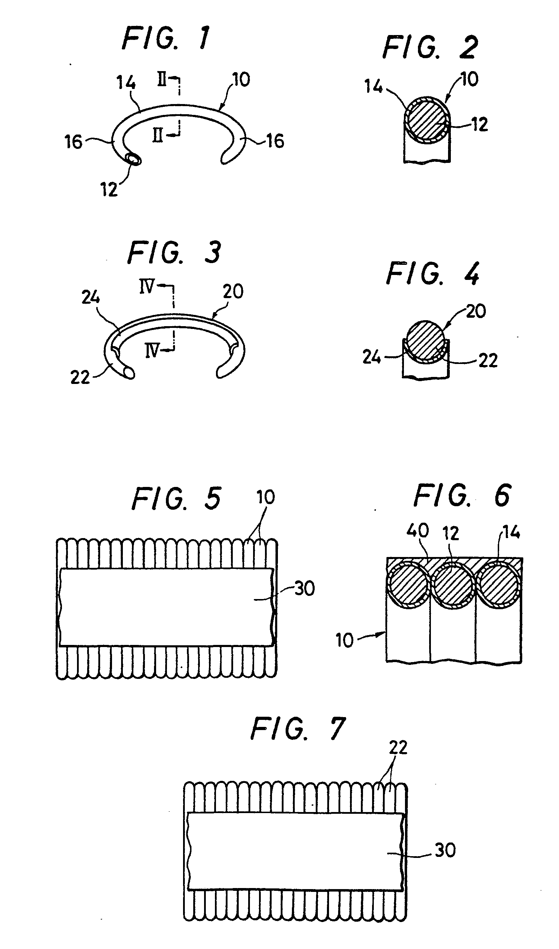

The C ring 10 of Figs. 1 and 2 comprises a round wire rod 12 which is made of steel and bent in a figure C and a tubular cover 14 which is made of vinyl chloride resin, the round wire rod 12 being covered with the tubular cover 14. In order to fabricate the C ring 10, after covering a length of round wire rod with a length of tubular cover and then cutting the covered round wire rod, the cut round wire rod is bent into a figure C.

When two wires are secured together with such a C ring 10, upon properly positioning the wires in the C ring 10 and clamping both sides 16 thereof with the tool, the cover 14 is sandwiched between the wires and the round wire rod 12 subjects the cover 14 to deformation. Thus deformation of the round wire rod 12 by the tool may be increased as much as the deformation of the cover 14 and therefore, even if the round wire rod 12 gives rise to spring back, the cover 14 may forcibly be pushed upon the wires by the force of the round wire rod 12 so as to increase the securing strength. Since the wires and the round wire rod 12 are not brought into direct contact with each other even if the wires are deformed by force, friction noise is not generated. Further, since the round wire rod 12 is covered with the cover 14, the round wire rod 12 is protected from corrosion.

Referring now to the drawings and more particularly to Fig. 3 and Fig. 4, there is shown another C ring according to the invention. In this embodiment, the C ring 20 comprises a round wire rod 22 which is made of steel and bent in a figure C and a cover 24 which is made of vinyl chloride resin, the cover 24 being coated on the inside of the round wire rod 22. The C ring 20 has an increased securing strength and gives rise to reduced friction noise in the same way as the C ring 10 shown in Fig. 1 and Fig. 2.

Further in the abovementioned embodiment, instead of the round wire rods 12 and 22, a square wire rod, or other shapes may be employed. Preferably, steel is employed as material of each round wire rod 12 and 22, but aluminium, copper, etc., may be used therefor. Vinyl chloride resin may be used as the material of the cover 14 and 24, but another plastics material, rubber, paper, felt, leather, etc., may be used. As shown in Fig. 5, several C rings 10 may be aligned and bonded with an adhesive tape 30 along the back of the C rings 10 to form an assembly, Thus, a plurality of the C rings 10 can be inserted into the tool at a time to improve efficiency. Alternatively, the wire rods 22 of the second embodiment may be bonded by adhesive tape 30 before being coated with the cover 24.

# Claims

1. A C ring comprising a metallic wire rod bent in a figure C and a pliable, non-metallic cover installed at least inside of the said wire rod.

2. The C ring according to claim 1 wherein said cover is a tubular form and said wire rod is covered with said cover.

3. The C ring according to claim 1 wherein said cover is coated on an inner part of the curve of said wire rod.

4. The C ring according to claim 1 wherein said cover is made of plastic.

5. The C ring according to claim 4 wherein said plastic is vinyl chloride resin.

6. The C ring according to claim 1 wherein said wire rod is a round wire rod.

7. The C ring according to claim 1 wherein the material of said wire rod is steel.

## Patentansprüche

1. C-Ring umfassend einen metallenen Walzdraht, der zu einer Figur C gebogen ist und eine biegsame, nichtmetallische Abdeckung, die wenigstens innerhalb des genannten Walzdrahtes aufgebracht ist.

2. C-Ring nach Anspruch 1, worin die genannte Abdeckung röhrenförmig ist und der genannte Walzdraht mit der genannten Abdeckung be- bzw. abgedeckt ist.

3. C-Ring nach Anspruch 1, worin die genannte Abdeckung an einem inneren Abschnitt der Krümmung des genannten Walzdrahtes als Beschichtung aufgebracht ist.

4. C-Ring nach Anspruch 1, worin die genannte Abdeckung aus Kunststoff hergestellt ist.

5. C-Ring nach Anspruch 4, worin der genannte Kunststoff Vinylchloridharz ist.

6. C-Ring nach Anspruch 1, worin der genannte Walzdraht ein runder Walzdraht ist.

7. C-Ring nach Anspruch 1, worin das Material des genannten Walzdrahtes Stahl ist.

## Revendications

1. Anneau en forme de C comprenant une tige métallique courbée en forme de C et un revêtement souple non métallique disposé au moins à l'intérieur de ladite tige métallique.

2. Anneau en forme de C selon la revendication 1, dans lequel ledit revêtement présente une forme tubulaire et ladite tige métallique est enrobée dudit revêtement.

3. Anneau en forme de C selon la revendication 1, dans lequel ledit revêtement est prévu sur une partie interne de la courbure de ladite tige métallique.

4. Anneau en forme de C selon la revendication 1, dans lequel ledit revêtement est réalisé en une matière plastique.

5. Anneau en forme de C selon la revendication 4, dans lequel ladite matière plastique est une résine de chlorure de vinyle.

6. Anneau en forme de C selon la revendication 1, dans lequel ladite tige métallique est une tige métallique ronde.

7. Anneau en forme de C selon la revendication 1, dans lequel la matière de ladite tige métallique est de l'acier.

FIG. 1

FIG. 2

FIG. 3

FIG. 4

FIG. 5

FIG. 6

FIG. 7